**Europäisches Patentamt**

**European Patent Office**

**Office européen des brevets**

(11) Veröffentlichungsnummer: **0 221 607 B1**

## EUROPÄISCHE PATENTSCHRIFT

(45) Veröffentlichungstag der Patentschrift: **06.03.91**

(51) Int. Cl.⁵: **B29C 45/76**

(21) Anmeldenummer: **86201870.2**

(22) Anmeldetag: **24.10.86**

(54) Gewichtsregler für eine regelbare Spritzgiessmaschine.

(30) Priorität: **30.10.85 DE 3538516**

(43) Veröffentlichungstag der Anmeldung:
**13.05.87 Patentblatt 87/20**

(45) Bekanntmachung des Hinweises auf die
Patenterteilung:
**06.03.91 Patentblatt 91/10**

(84) Benannte Vertragsstaaten:
**DE FR GB**

(56) Entgegenhaltungen:
**EP-A- 0 076 010**
**CH-A- 553 053**
**GB-A- 736 662**
**GB-A- 989 660**

**PLAST VERARBEITER, Band 34, Nr. 3, März
1983, Seiten 213-218, Speyer/Rhein, DE; H.
KÄUFER et al.: "Produktadaptive Spritzgiessmaschinensteuerung"**

**DERWENT JAPANESE PATENTS GAZETTE,
Sektion CH, Woche 82-05, 14. August 1981,
Zusammenfassung Nr. 82-08606E, Derwent
Publications Ltd, Londen, GB; & JP-A-56 101
813 (NIPPON CONTROLLER S)**

(73) Patentinhaber: **Philips Patentverwaltung
GmbH**
**Wendenstrasse 35 Postfach 10 51 49**
**W-2000 Hamburg 1(DE)DE**

Patentinhaber: **N.V. Philips' Gloeilampenfabrieken**
**Groenewoudseweg 1**
**NL-5621 BA Eindhoven(NL)FR**

(72) Erfinder: **Schmidt, Fred**
**Alardusstrasse 7**
**W-2000 Hamburg 19(DE)**

(74) Vertreter: **Auer, Horst, Dipl.-Ing.**
**Philips Patentverwaltung GmbH Wendenstrasse 35 Postfach 10 51 49**
**W-2000 Hamburg 1(DE)**

**Beschreibung**

Die Erfindung bezieht sich auf einen Gewichtsregler für eine von einem Prozeßregler geregelte Spritzgießmaschine mit einer Waage und einer Schaltungsanordnung zur Ermittlung eines Nachdruckstellwertes aus einem vorgegebenen Sollgewicht der Spritzgießteile.

Aus dem Aufsatz "Produktadaptive Spritzgießmaschinensteuerung" auf welchem der Oberbegriff des Anspruchs 1 beruht, der Autoren H. Käufer und R. Hüppe, aus der Zeitschrift "Plast Verarbeiter", Band 34, Nr. 3, März 1983, Seite 213 bis 218, Speyer/Rhein, DE, sind mögliche Meßverfahren bekannt, die z.B. die Gewichtsprüfung nach dem Auswerfen der Spritzgießteile aus der Spritzgießmaschine zur Regelung derselben benutzen. Die derart ermittelten Werte werden als neue Steuergrößen der üblichen Ablaufsteuerung der Spritzgießmaschine überlagert und damit in den Prozeß integriert. Neben der Gewichtsmessung beinhaltet das Konzept eine Modellbildung. Die aus der Gewichsmessung erhaltenen Werte beeinflussen die Steuergrößen für die Ablaufsteuerung. Im einzelnen wird hierzu von einem Prozeßrechner der von der Waage angegebene Gewichtswert übernommen, eine Kontrolle durchgeführt und vom Rechner ein Signal zum Entfernen des Teils von der Waage an die Neumatik und ein Tarriersignal abgegeben. Diesem aufwendigen und wenig konkreten Konzept ist allerdings nicht zu entnehmen, wie die Modellbildung abläuft, noch wie der aus der Modellbildung erhaltene Nachdruckstellwert bei einer Gewichtsveränderung beeinflußt wird.

Aus dem Buch "Prozeßautomatisierung beim Extrudieren und Spritzgießen von Kunststoffen" von Dr.-Ing. H. G. Wiegand, Carl-Hanser-Verlag München Wien 1979, Seite 179-185, ist ein Prozeßführungssystem für eine regelbare Spritzgießmaschine mit einer als Microcomputer ausgebildeten Schaltunganordnung bekannt, der eine dem Sollgewicht eines Spritzgießteiles entsprechende Größe zugeführt wird und die daraus anhand von Modellgleichungen ein Druckprofil für die Nachdruckphase der Spritzgießmaschine errechnet. Dieses Druckprofil wird einem Nachdruckregelkreis der Spritzgießmaschine als Sollwert zugeführt, wodurch das Gewicht des Spritzgießteiles über den Nachdruck einstellbar ist. Anhand von Modellgleichungen läßt sich das Druckprofil aus einem vorgegebenen Sollgewicht aber nur näherungsweise berechnen, da während der Produktion auf-tretende Veränderungen des Spritzgießwerkstoffes oder Störungen in der Spritzgießmaschine anhand von Modellgleichungen, die vor Beginn der Produktion in den Microcomputer eingegeben und danach nicht mehr geändert werden, nicht berücksichtigt werden können. Hierdurch ergeben sich bleibende Abweichungen des Istgewichtes vom eingestellten Sollgewicht der Spritzgießteile.

Aufgabe der Erfindung ist es, einen Gewichtsregler für eine geregelte Spritzgießmaschine zu schaffen, der einfach aufgebaut ist und das Gewicht von Spritzgießteilen auf einen vorgebbaren Sollwert regelt.

Diese Aufgabe wird dadurch gelöst, daß die Schaltungsanordnung, an der eingangsseitig das Sollgewicht anliegt, ausgangsseitig mit einem Eingang eines Addierers verbunden ist, an dessen weiterem Eingang ein Korrekturwert anliegt und die Summe dieser Werte als Nachdrucksollwert über eine entsprechende Verbindung an einem Eingang des Prozeßreglers anliegt, und daß der Korrekturwert am Ausgang eines Integrierers anliegt, der mit dem Addierer (18) und eingangsseitig mit dem Ausgang eines Subtrahierers verbunden ist, dessen nicht invertierender Eingang mit dem der Schaltungsanordnung und dessen invertierender Eingang mit dem Ausgang einer der Spritzgießmaschine nachgeordneten Analysenwaage für die Spritzgießteile verbunden ist.

Ist das Spritzgießteil zu leicht bzw. zu schwer, hat der vom Integrierer erzeugte Korrekturwert einen positiven bzw. negativen Wert, der den dem Prozeßregler zugeführten Nachdrucksollwert und damit auch das Gewicht des Spritzgießteiles vergrößert bzw. verkleinert. Dadurch werden während der Produktion auftretende Gewichts- und Formveränderungen der Spritzgießteile ausgeregelt.

Zur Automatisierung der Gewichtsregelung ist es vorteilhaft, wenn eine Fördereinrichtung die Spritzgießteile automatisch zur Analysenwaage befördert.

Die Schaltungsanordnung zur Ermittlung des Nachdruckwertes hat vorteilhaft
- ein erstes Subtrahierglied, an dessen nichtinvertierenden Eingang das Sollgewicht des Spritzgießteiles und an dessen invertierenden Eingang das Gewicht desjenigen Anteils der Schmelze anliegt, der während der Einspritzphase in die Spritzgießform der Spritzgießmaschine einfüllbar ist,
- einen Multiplizierer, zur Bildung des Produkts aus einem ersten einstellbaren Koeffizienten und einer der mittleren Temperatur der Schmelze entsprechenden Größe,
- ein zweites Subtrahierglied, dessen nicht-invertierender Eingang mit dem Ausgang des ersten Subtrahiergliedes und dessen invertierender Eingang mit dem Ausgang des Multiplizierers verbunden ist,
- einen dem Subtrahierglied nachgeordneten Dividierer, zur Bildung des Quotienten aus der am Ausgang des Substrahierers anliegenden Größe und einem zweiten einstellbaren Koeffizienten, an dessen Ausgang der Nachdruckstellwert anliegt.

Diese Schaltungsanordnung ist einfach aufgebaut und somit preisgünstig herstellbar. Außerdem arbeitet eine derartige Schaltungsanordnung, die sowohl aus analogen als auch aus digitalen Rechengliedern herstellbar ist, sehr zuverlässig.

Der Gewichtsregler kann Maschinendefekte, die lediglich eine geringe Veränderung des Gewichtes des Spritzgießteiles bewirken, wie z.B. den Ausfall eines von mehreren am Schneckenraum der Spritzgießmaschine angeordneten Temperaturzonen, durch Veränderung des Nachdruckes ausregeln. Bei größeren Maschinendefekten ergibt sich jedoch eine bleibende und nicht mehr ausregelbare Gewichtsveränderung des Spritzgießteiles, die zu einer stetigen Vergrößerung des vom Integrierer erzeugten Korrekturwertes führt. Überschreitet dieser Korrekturwert betragsmäßig einen maximalen Grenzwert, kann zur Maschinenüberwachung Alarm gegeben werden, wenn ein Schwellwertschalter am Ausgang des Integrierers angeschlossen ist, der einen Alarmgeber zur Auslösung eines Alarms mit einem Signal ansteuert, wenn der Korrekturwert einen vorgebbaren Betrag überschreitet.

Ein Ausführungsbeispiel der Erfindung wird im folgenden anhand der Zeichnungen beschrieben. Es zeigen:

Fig. I eine Spritzgießmaschine mit Prozeßregler und Gewichtsregler,

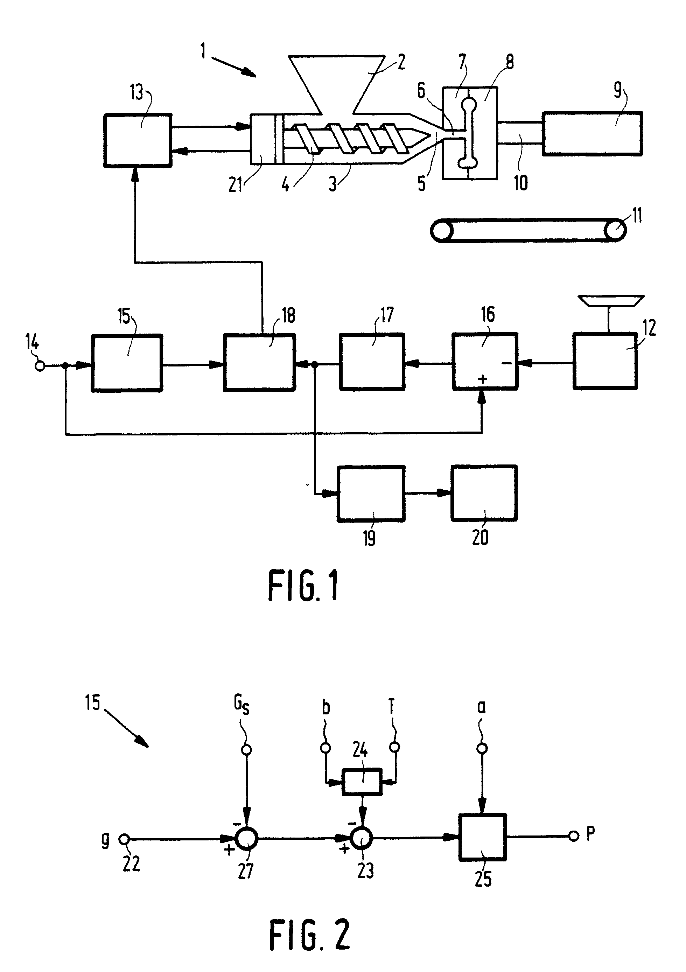

Fig. 2 eine Ausgestaltung der Schaltungsanordnung zur Ermittlung des Nachdruckstellwertes.

Die in Fig I schematisch dargestellte Spritzgießmaschine I weist einen Trichter 2 auf, über den Plastikgranulat in ein Schneckengehäuse 3 einfüllbar ist, in der eine drehbar und axial verschiebbar gelagerte Schnecke 4 angeordnet ist. Eine Einspritzdüse 5 des Schneckengehäuses 3 wird während des Formfüllvorganges an einen Kanal 6 eines Formteiles 7 einer Spritzgießform angepreßt, deren anderes Formteil 8 an dem in einem Zylinder 9 geführten Kolben IO eines hydraulischen Antriebes befestigt ist.

Unterhalb der Spritzgießform 7, 8 ist eine Fördervorrichtung II angeordnet, die beispielsweise als Förderband ausgebildet ist und erhärtete und aus der Spritzgießform 7, 8 ausgeworfene Spritzgießteile zur Analysewaage I2 transportiert.

Mittels eines Prozeßreglers I3 werden hierbei die Drücke der für die axiale Bewegung der Schnecke 4 und den hydraulischen Antrieb 9, IO erforderlichen Hydraulikflüssigkeiten, die Temperatur der sich im Schneckengehäuse 3 befindlichen Schmelze, die Drehgeschwindigkeit der Schnecke 4, der Druck der während der Einspritzphase in die Spritzgießform 7, 8 eingespritzten Schmelze und der Nachdruck geregelt, der erforderlich ist, um während der Nachdruckphase, wenn die in der Spritzgießform 7, 8 befindliche Schmelze aushärtet und sich die Abmessungen des Spritzgießteiles verringern, zusätzliche Schmelze in die Spritzgießform 7,8 einzuspritzen.

Da das Gewicht eines Spritzgießteiles durch Steuerung des Nachdruckes um ca. 2 bis 3 Prozent veränderbar ist, wird der Prozeßregler I3 von einem Gewichtsregler mit dem einzustellen Nachdrucksollwert angesteuert, der im Gewichtsregler durch den Vergleich des über die Klemme I4 zuführbaren Sollgewichtes mit dem von der Analysewaage I2 lieferbaren Istgewicht des Spritzgießteiles ermittelt wird.

Der Gewichtsregler weist eine Schaltungsanordnung I5 auf, die als Microcomputer oder als Analogrechner (siehe Fig. 2) ausgebildet sein kann und die aus dem über die Klemme I4 zuführbaren Sollgewicht anhand einer den Spritzgießprozeß beschreibenden Modellgleichung einen Nachdruckstellwert errechnet. Da die Modellgleichung den Spritzgießprozeß hierbei nur näherungsweise beschreibt, stellt auch der Nachdruckstellwert nur einen Schätzwert dar, der, dem Prozeßregler I3 als Nachdrucksollwert zugeführt, Spritzgießteile ergibt, deren Gewicht nur näherungsweise dem über die Klemme I4 eingebbaren Sollgewicht entspricht.

Zur Korrektur der hierbei auftretenden Gewichtsfehler ist ein Subtrahierer I6 vorgesehen, der das von der Analysewaage ermittelte Istgewicht des Spritzgießteiles von dem Sollgewicht subtrahiert und die Differenz dieser beiden Werte einem Integrierer I7 zuführt, der daraus einen Korrekturwert ermittelt, der je nach Abweichung des Istgewichtes vom Sollgewicht ein positives oder negatives Vorzeichen hat und im Addierer I8 zu dem von der Schaltungsanordnung I5 ermittelten Nachdruckstellwert addiert wird. Die Summe ergibt den Nachdrucksollwert, der im Mittel dem Nachdruckstellwert entspricht, der aber größer als der Nachdruckstellwert ist, wenn das Istgewicht des Spritzgießteiles kleiner als dessen Sollgewicht ist und der kleiner als der Nachdruckstellwert ist, wenn das Istgewicht des Spritzgießteiles größer als dessen Sollgewicht ist. Der Nachdrucksollwert wird vom Addierer I8 dem Prozeßregler I3 zugeführt, der unter anderem während der Nachdruckphase den Druck der in den Zylinderraum 2I einströmenden und einen axialen Druck der rotierenden Schnecke 4 in Richtung der Einspritzdüse 5 bewirkenden Hydraulikflüssigkeit auf den eingegebenen Nachdrucksollwert regelt.

Der Integrierer I7 ist ausgangsseitig mit einem Schwellwertschalter I9 verbunden, der einen Alarmgeber 20 immer dann mit einem einen Alarm auslösenden Signal ansteuert, wenn der vom Integrierer I7 gelieferte Korrekturwert betragsmäßig größer als ein vorgebbarer Maximalwert ist.

Vor Beginn der Serienproduktion eines Spritzgießteiles werden zunächst anhand einiger Probeschüsse die Auswirkungen der Höhe des Nachdruckes und der Temperatur der Schmelze auf das Gewicht des Spritzgießteiles untersucht. Hierzu werden bei jedem Probeschuß der Nachdruck und die Temperatur der Schmelze gemessen und das Gewicht des Spritzlings und außerdem das Gewicht desjenigen Teiles der Schmelze gewogen, die während der Einspritzphase, also vor Beginn der Nachdruckphase, in die Spritzgießform 7, 8 eingespritzt wird. Hierbei wird ermittelt, wie sich das Gewicht des Spritzlings bei Änderungen des Nachdruckes verändert, wenn die Temperatur und die Menge der Schmelze während der Einspritzphase konstant bleiben. Der Quotient aus Gewichtsänderung pro Nachdruckänderung ergibt einen Koeffizienten a.

Weiterhin wird gemessen, wie sich das Gewicht des Spritzgießteiles bei Änderung der Temperatur der Schmelze verändert, wenn der Nachdruck und das Gewicht $G_S$ der Schmelze während der Einspritzphase konstant bleiben. Der Quotient aus Gewichtsänderung pro Änderung der Temperatur der Schmelze ergibt einen Koeffizienten b.

Hieraus ergibt sich die Modellgleichung für das Gewicht g des Spritzgießteiles in Abhängigkeit des Nachdruckstellwertes p, der Temperatur der Schmelze T der Koeffizienten a und b und des Gewichtes $G_S$ desjenigen Teiles der Schmelze, der während der Einspritzphase in die Spritzgießform gelangt.:
$$g = ap + bT + G_S$$
Anhand dieser Modellgleichung läßt sich der Nachdruckstellwert p als Funktion des Sollgewichtes g bestimmen, wenn als Temperaturwert T und als Gewichtswert $G_S$ die Durchschnittswerte der bei den Probeschüssen gemessenen Temperatren und Gewichtsanteile der Schmmelze in die folgende Beziehung eingesetzt werden:
$$p = (g - bT - G_S)/a$$
Die Schaltungsanordnung 15 zur Ermittlunung des Nachdruckstellwertes p kann hierbei als Microcomputer ausgebildet sein, der mit der Beziehung zur Berechnung dess Nachdruckstellwertes p programmiert ist und in dem die Größen a, b, T und $G_S$ auf Speiherplätzen speicherbar sind.

Die Schaltungsanordnung 15 kann auch als ein in Fig. 2 dargestellter Analogrechner ausgebidet sein, in den die Größenn a, b, T und $G_S$ über je einen Anschluß beispielsweise unter Verwendung von Potentiometerschaltungen eingebbar sind.

Das Sollgewicht g des von der Spritzgießmaschine 1 herzustellenden Spritzgießteiles wir über die Klemme 14 in die Schaltungsanordnung 15 eingegeben, die daraus den Nachdruckstellwert p ermittelt. Der vom Integrierer 17 erzeugte Korrekturwert ist zunächst Null, da noch kein Spritzgießteil hergestellt und von der Analysewaage 12 gewogen worden ist. Der Nachdruckstellwert p wird somit als

Nachdrucksollwert dem Prozeßregler 13 zugeführt, der anhand dieses Sollwert den Nachdruck der nach Beendigung der Einspritzphase zusätzlich in die Spritzgießform 7, 8 einzuspritzenden Schmelze einstellt.

Nach Beendigung der Nachdruckphase wird die Spritzgießform 7, 8 geöffnet, das Spritzgießteil gelangt über die Fördervorrichtung 11 auf die Analysewaage 12 und wird gewogen. Das hierbei ermittelte Istgewicht des Spritzgießteiles wird dem invertierenden Eingang des Subtrahierers 16 zugeführt, der über seinen nicht-invertierenden Eingang mit dem Sollgewicht g angesteuert wird und der die Differenz aus Sollgewicht und Istgewicht dem Integrierer 17 zuführt.

Ist das Spritzgießteil beispielsweise zu leicht, ist die Differenz aus Sollgewicht und Istgewicht positiv, so daß dem Integrierer 17 ein positiver Wert zugeführt wird und damit im Addierer 18 der von der Schaltungsanordnung 15 errechnete Nachdruckstellwert p vergrößert wird. Der sich hierbei ergebende und dem Prozeßregler 13 zugeführte Nachdrucksollwert ist somit größer als der errechnete Nachdruckstellwert und bewirkt, daß der Nachdruck der Schmelze erhöht wird. Hierdurch kann das Gewicht des Spritzgießteiles um ca. 2 bis 3 Prozent vergrößert werden.

Ist nach Vergrößerung des Nachdruckes das von der Analysewaage 12 ermittelte Gewicht des Spritzgießteiles immer noch geringer als das über die Klemme 14 eingebbare Sollgewicht g, wird dem Integrierer 17 weiterhin ein positiver Wert zugeführt, so daß der hierbei ermittelte Korrekturwert ansteigt und auch der Nachdrucksollwert weiter vergrößert wird. Es können somit mehrere Schüsse erforderlich sein, bis das tatsächliche Istgewicht des Spritzgießteiles einem vorggebbaren Sollgewicht entspricht.

Fehler der Spritzgießmaschine 1 bzw. Fehler bei der Programmierung der Schaltungsanordnung 15 können bewirken, daß die Abweichung des Istgewichtes vom Sollgewicht zu groß und somit nicht mehr ausregelbar ist. Dann wird dem Integrierer 17 vom Subtrahierer 16 nach jedem Schuß ein von Null abweichender Wert zugeführt, so daß sich der vom Integrierer 17 erzeugte Korrekturwert solange verändert, bis sein Betrag einen im Schwellwertschalter 19 gespeicherten Grenzwert überschreitet. Daraufhin steuert der Schwellwertschalter 19 einen Alarmgeber 20 mit einem Signal zur Auslösung eines Alarmes an.

Die Schaltungsanordnung 15 kann als ein in Fig. 2 dargestellter Analogrechner ausgebildet sein, der den Nachdrucksstellwert p anhand der o.a. Beziehung ermittelt und der ein erstes Subtrahierglied 27 enthält, dessem nichtinvertierenden Eingang 22 das Sollgewicht g und dessem invertierendem Eingang eine dem Gewicht $G_S$ desjenigen Anteiles der Schmelze entsprechende Größe zuführbar sind, die während der Einspritzphase in die Spritzgießform der Spritzgießmaschine gelangt. Der Ausgang des ersten Subtrahiergliedes 21 ist mit dem nicht-invertierenden Eingang eines zweiten Subtrahiergliedes 23 verbunden, dessen invertierender Eingang von einem Multiplizierer 24 mit dem Produkt aus dem Koeffizienten b und der der Durchschnittstemperatur der Schmelze entsprechenden Größe T angesteuert wird. Der Ausgang des zweiten Subtrahiergliedes 23 ist mit einem Dividierer 25 verbunden, der das vom zweiten Subtrahierglied 23 gelieferte Rechenergebnis durch den Koeffizienten a dividiert und daraus den Nachdruckstellwert p ermittelt. Die Größen $G_S$, b, T und a können der als Analogrechner ausgebildeten Schaltungsanordnung l5 über steuerbare Spannungsquellen bzw. über Potentiometerschaltungen zugeführt werden.

## Ansprüche

1.  Gewichtsregler für eine von einem Prozeßregler (13) geregelte Spritzgießmaschine (1) mit einer Waage (12) und einer Schaltungsanordnung (15) zur Ermittlung eines Nachdruckstellwertes aus einem vorgegebenen Sollgewicht der Spritzgießteile, dadurch gekennzeichnet, daß die Schaltungsanordnung (15), an der eingangsseitig das Sollgewicht anliegt, ausgangsseitig mit einem Eingang eines Addierers (18) verbunden ist, an dessen weiterer Eingang ein Korrekturwert anliegt und die Summe dieser Werte als Nachdrucksollwert über eine entsprechende Verbindung an einem Eingang des Prozeßreglers (13) anliegt, und daß der Korrekturwert am Ausgang eines Integrierers (17) anliegt, der mit dem Addierer (18) und eingangssseitig mit dem Ausgang eines Subtrahierers (16) verbunden ist, dessen nicht invertierender Eingang mit dem der Schaltungsanordnung (15) und dessen invertierender Eingang mit dem Ausgang einer der Spritzgießmaschine (1) nachgeordneten Analysenwaage (12) für die Spritzgießteile verbunden ist.

2.  Gewichtsregler nach Anspruch 1, dadurch gekennzeichnet, daß eine Fördervorrichtung (11) die Spritzgießteile automatisch zur Analysewaage (12) befördert.

3.  Gewichtsregler nach Anspruch 1 oder 2, dadurch gekennzeichnet, daß die Schaltungsanordnung (15) zur Ermittlung des Nachdruckstellwertes

-   ein erstes Subtrahierglied (27) aufweist, an dessem nicht-invertierenden Eingang (22) das Sollgewicht (g) des Spritzgießteiles und an dessem invertierenden Eingang das Gewicht ($G_S$) desjenigen Anteiles der Schmelze anliegt, der während der Einspritzphase in die Spritzgießform (7, 8) der Spritzgießmaschine (1) einfüllbar ist,
-   einen Multiplizierer (24) aufweist, zur Bildung des Produkts aus einem ersten einstellbaren Koeffizient (b) und einer der mittleren Temperatur (T) der Schmelze entsprechenden Größe,
-   ein zweites Subtrahierglied (23) aufweist, dessen nichtinvertierender Eingang mit dem Ausgang des ersten Subtrahiergliedes (27) und dessen invertierender Eingang mit dem Ausgang des Multiplizierers (24) verbunden ist,
-   und einen dem Subtrahierglied (23) nachgeordneten Dividierer (25) aufweist, zur Bildung des Quotienten aus der am Ausgang des Subtrahierers (23) anliegenden Größe und einem zweiten einstellbaren Koffizienten (a), an dessen Ausgang der Nachdruckstellwert (p) anliegt.

4.  Gewichtsregler nach einem der Ansprüche 1 bis 3, dadurch gekennzeichnet, daß am Ausgang des Integrierers (17) ein Schwellwertschalter (19) angeschlossen ist, der einen nachgeordneten Alarmgeber (20) mit einem Signal zur Auslösung eines Alarmes ansteuert, wenn der Korrekturwert einen vorgebbaren Betrag überschreitet.

## Claims

1.  A weight regulator for an injection moulding machine (1) controlled by a process control unit (13) comprising a balance (12) and a circuit arrangement (15) for determining a dwell pressure adjustment value from a predetermined nominal weight of the injection-moulded parts, characterized in that the circuit arrangement (15), to whose input the nominal weight is applied, has an output connected to an input of an adder (18), of which a further input receives a correction value, the sum of these values being applied to an input of the process control unit (13) through a relevant connection as a nominal dwell pressure value, and in that the correction value appears at the output of an integrator (17) which is connected to the adder (18) and, with its input, to the output of a subtraction device (16) of which a non-inverting input is connected to that of the circuit arrangement (15) and of which an inverting input is connected to the output of an analytical balance (12) for the injection-moulded parts arranged at the delivery end of the injection-moulding machine (1).

2. A weight regulator as claimed in Claim 1, characterized in that the injection-moulded parts are automatically transported to the analytical balance (12) by a transport device (11).

3. A weight regulator as claimed in Claim 1 or 2, characterized in that the circuit arrangement (15) for determining the dwell pressure adjustment value comprises

- a first subtraction member (27), to the non-inverting input (22) of which can be supplied the nominal weight (g) of the injection-moulded part and to the inverting input of which can be supplied the weight ($G_S$) of that quantity of the melt which can be fed into the injection mould (7, 8) of the injection moulding machine (1) during the injection phase;
- a multiplier (24) for forming the product of a first adjustable coefficient ( $\underline{b}$ ) and a quantity corresponding to the $\overline{\text{average}}$ temperature (T) of the melt;
- a second subtraction member (23), whose non-inverting input is connected to the output of the first subtraction member (27) and whose inverting input is connected to the output of the multiplier (24);
- a divider (25) connected to the output of the subtraction member (23) for forming the quotient of the quantity delivered at the output of the subtraction member (23) and a second adjustable coefficient ( $\underline{a}$ ), at the output of which divider the $\overline{\text{dwell}}$ pressure adjustment value ( $\underline{p}$ ) appears.

4. A weight regulator as claimed in any one of Claims 1 to 3, characterized in that the integrator (17) is connected through its output to a limit switch (19) which triggers an alarm device (20) with a signal for producing an alarm when the correction value exceeds a programmable amount.

**Revendications**

1. Régulateur de poids pour une machine à mouler par injection (1) réglée par un régulateur de processus (13), comportant une balance (12) et un montage de circuit (15) pour déterminer une valeur de réglage de la pression de maintien à partir d'un poids de consigne prédéfini des pièces moulées par injection, caractérisé en ce que le montage de circuit (15), à l'entrée duquel est appliqué le poids de consigne, est connecté, par sa sortie, à une entrée d'un additionneur (18), dont l'autre entrée reçoit une valeur de correction, la somme de ces valeurs étant appliquée, en tant que valeur de consigne de pression de maintien, par l'intermédiaire d'une liaison correspondante, à une entrée du régulateur de processus (13), et que la valeur de correction est présente à la sortie de l'intégrateur (17) qui est connecté à l'additionneur (18) et, par son entrée, à la sortie d'un soustracteur (16), dont l'entrée non inverseuse est connectée à celle du montage de circuit (15) et dont l'entrée inverseuse est connectée à la sortie d'une balance analytique (12) disposée en aval de la machine à mouler par injection (1) et destinée aux pièces moulées par injection.

2. Régulateur de poids suivant la revendication 1, caractérisé en ce qu'un dispositif transporteur (11) amène les pièces moulées par injection automatiquement à la balance analytigue (12).

3. Régulateur de poids suivant la revendication 1 ou 2, caractérisé en ce que le montage de circuit (15) destiné à déterminer la valeur de réglage de pression de maintien comporte :

- un premier élément soustracteur (27), à l'entrée non inverseuse (22) duquel est appliqué le poids de consigne (g) de la pièce moulée par injection et à l'entrée inverseuse duquel est appliqué le poids ($G_S$) de la fraction de la matière fondue qu'il est possible d'injecter dans le moule à injection (7, 8) de la machine à mouler par injection (1) pendant la phase d'injection,
- un multiplicateur (24) pour former le produit d'un premier coefficient réglable (b) et d'une grandeur correspondant à la température moyenne (T) de la matière fondue,
- un second élément soustracteur (23), dont l'entrée non inverseuse est connectée à la sortie du premier élément soustracteur (27) et dont l'entrée inverseuse est connectée à la sortie du multiplicateur (24), et
- un diviseur (25) installé en aval de l'élément soustracteur (23) et destiné à former le guotient de la grandeur présente à la sortie du soustracteur (23) et d'un second coefficient réglable (a), à la sortie duquel est présente la valeur de réglage de la pression de maintien (p).

4. Régulateur de poids suivant l'une quelconque des revendications 1 à 3, caractérisé en ce qu'à la sortie de l'intégrateur (17) est connecté un commutateur à valeur de seuil (19) qui active un générateur d'alarme (20) installé en aval par un signal destiné à déclencher une alarme lorsque la valeur de correction excède une valeur absolue pouvant être prédéfinie.

**FIG. 1**

**FIG. 2**